# FASCICULE DE BREVET EUROPEEN

(11) **EP 4 007 863 B1**
(45) Date de publication et mention de la délivrance du brevet: **06.12.2023**
(21) Numéro de dépôt: 20742737.8
(22) Date de dépôt: 22.07.2020
(51) Int. Cl.: F16J 13/18, F16J 13/06, B01J 3/03

(54) **DISPOSITIF DE FERMETURE DE CUVE ET CUVE**
TANKVERSCHLUSSVORRICHTUNG UND TANK
TANK CLOSURE DEVICE AND TANK

(30) Priorité: 02.08.2019 FR 1908928
(43) Date de publication de la demande: 08.06.2022
(73) Titulaire: Goavec Engineering, 61000 Alençon (FR)
(72) Inventeur: REYNDERS, Marcel, 61000 Alençon (FR)
(74) Mandataire: Cabinet Netter
(86) Numéro de dépôt international: PCT/EP2020/070645
(87) Numéro de publication internationale: WO 2021/023510

(56) Documents cités:
- EP-A1- 2 428 712
- DE-C1- 3 421 907
- FR-A1- 2 865 011
- FR-A5- 2 208 493
- US-A- 3 895 735
- US-A- 4 347 944

## Description

Le domaine de l'invention concerne le domaine des cuves. Les cuves peuvent être à pression supérieure ou inférieure à la pression ambiante ou à pression ambiante.

Le mélange de certains constituants est effectué à une pression différente de la pression ambiante, en général égale à la pression atmosphérique ou peu différente de la pression atmosphérique, notamment dans le cas d'un local à pression contrôlée. Au cours de l'utilisation de la cuve pour un procédé, la pression et la température sont susceptibles de varier. Un retour à la pression ambiante est effectué avant l'ouverture d'un couvercle, par exemple par une vanne. Une ouverture de couvercle à une pression interne de la cuve supérieure à la pression ambiante peut être dangereuse. Une ouverture de couvercle à une pression interne de la cuve inférieure à la pression ambiante peut être impraticable.

Pour obtenir une telle pression, une cuve à pression comprend en général, un corps de cuve, un couvercle de cuve et un organe de fermeture.

Les cuves de stockage ou de transport sont soumises à des exigences voisines.

FR 2208493 divulgue un dispositif selon la partie pré-caractérisante de la revendication 1.

Or il existe un besoin de réduire le risque de projection à l'ouverture, de réduire le temps nécessaire pour ouvrir ou fermer la cuve, de faciliter le nettoyage et de renforcer la tenue à la pression tout en maintenant les propriétés d'étanchéité.

Il existe un besoin de pallier les inconvénients précités.

A cet effet, l'invention propose un dispositif de fermeture de cuve comprenant un corps de cuve, un couvercle de cuve et un organe de fermeture. Le dispositif comprend un rebord annulaire solidaire du corps de cuve. Le dispositif comprend un rebord annulaire solidaire du couvercle de cuve, coopérant à l'état fermé avec le rebord annulaire du corps de cuve pour former une jonction étanche. L'organe de fermeture comprend un cercle ouvert usiné par enlèvement de matière. Le cercle ouvert est à section en C comprenant une branche inférieure en appui, à l'état fermé, sur le rebord annulaire du corps de cuve, une branche supérieure en appui, à l'état fermé, sur le rebord annulaire du couvercle de cuve, et une branche intermédiaire reliant les branches inférieure et supérieure. Le cercle ouvert est monobloc. Le cercle ouvert présente à l'état libre un diamètre sensiblement égal audit diamètre à l'état fermé. L'organe de fermeture comprend en outre un tendeur libérable exerçant, à l'état fermé, une traction tendant à rapprocher les extrémités du cercle ouvert délimitant ladite ouverture. La cuve est étanche à l'état fermé. Les efforts mécaniques résultant de la pression sont répartis.

L'invention propose un dispositif de cuve comprenant un corps de cuve, un couvercle de cuve et un organe de fermeture. Un rebord annulaire est solidaire du corps de cuve. Un rebord annulaire est solidaire du couvercle de cuve et coopère à l'état fermé avec le rebord annulaire du corps de cuve pour former une jonction étanche. L'organe de fermeture comprend un cercle ouvert usiné par enlèvement de matière. Le cercle ouvert est à section en C comprenant une branche inférieure en appui, à l'état fermé, sur le rebord annulaire du corps de cuve, une branche supérieure en appui, à l'état fermé, sur le rebord annulaire du couvercle de cuve, et une branche intermédiaire reliant les branches inférieure et supérieure. Le cercle ouvert est monobloc. Le cercle ouvert présente à l'état libre un diamètre sensiblement égal audit diamètre à l'état fermé. L'organe de fermeture comprend en outre un tendeur libérable exerçant, à l'état fermé, une traction tendant à rapprocher les extrémités du cercle ouvert délimitant ladite ouverture. Dans le cas de cuve à trou d'homme fermé par un couvercle ou porte, une sécurité élevée contre un mouvement violent du couvercle sous l'effet de la pression intérieure trop élevée est obtenue.

Dans un mode de réalisation, la distance entre les extrémités du cercle à l'état fermé est inférieure à 75 mm, de préférence inférieure à 5 mm. On évite une concentration de contraintes excessive.

Dans un mode de réalisation, lors de l'ouverture de la cuve, l'organe de fermeture reste solidaire du couvercle de cuve. On évite ainsi une souillure de l'organe de fermeture et l'organe de fermeture participe à la protection des opérateurs en cas de projection.

Dans un mode de réalisation, le tendeur comprend un ensemble vis-écrou supporté par deux paires de brides solidaires chacune d'une desdites extrémités. Le serrage est maîtrisé.

Dans un mode de réalisation, le tendeur comprend un vérin à vis, préférablement électrique. Le vérin peut être pneumatique ou hydraulique. La fermeture est rapide.

Dans un mode de réalisation, le tendeur comprend un excentrique ou une grenouillère. La fermeture est rapide.

Dans un mode de réalisation, le couvercle de cuve est supporté à l'état ouvert par une articulation. Le couvercle de cuve peut être articulé sur le corps de cuve.

Dans un mode de réalisation, le cercle ouvert est usiné par enlèvement de matière.

Dans un mode de réalisation, la branche intermédiaire présente une épaisseur supérieure à 10 mm. L'ensemble est rigide à l'état fermé.

Dans un mode de réalisation, chaque branche radiale, inférieure ou supérieure, présente une surface d'appui prévue pour coopérer avec un rebord respectif inférieur ou supérieur, à l'état fermé.

Dans un mode de réalisation, la surface d'appui étant tronconique d'angle compris entre 70 et 85° par rapport à l'axe du cône, de préférence compris entre 75 et 80°. Le serrage du cercle provoque le serrage du deuxième rebord et du premier rebord.

Dans un mode de réalisation, le dispositif de fermeture comprend un joint d'étanchéité monté entre les rebords du corps de cuve et du couvercle de cuve.

De préférence, le joint d'étanchéité est logé dans une gorge annulaire de l'un des rebords.

Selon l'invention, l'un des rebords présente un bourrelet de centrage dirigé vers le bas en complémentarité de forme avec l'autre rebord. Le bourrelet peut être annulaire. Le bourrelet est en complémentarité de forme avec une gorge annulaire ou un chanfrein ménagé dans l'autre rebord entre une surface supérieure et une surface périphérique dudit autre rebord.

Selon l'invention, le joint d'étanchéité est logé dans une gorge annulaire de l'un des rebords inférieur et supérieur, la gorge annulaire étant plus large en fond de gorge qu'en ouverture de gorge pour retenir le joint d'étanchéité. Le joint d'étanchéité est retenu dans la gorge, notamment du rebord supérieur.

Dans un mode de réalisation, le dispositif de fermeture de cuve comprend un carter autour de l'organe de fermeture. Les risques de projection sont encore réduits. Le carter peut être de surface intérieure cylindrique, notamment de révolution, apte à entrer en contact avec le cercle ouvert lors d'une manoeuvre d'ouverture. La surface intérieure peut être coaxiale à la cuve. Le contact du cercle ouvert sur la surface intérieure maintient la coaxialité du cercle ouvert et de la cuve. Les risques de décalage radial du cercle ouvert sont réduits.

Dans un mode de réalisation, le premier rebord et le deuxième rebord sont annulaires.

Dans un mode de réalisation, les pièces du dispositif sont mises en oeuvre dans leur domaine élastique.

Dans un mode de réalisation, le dispositif est conçu pour une pression différente de la pression atmosphérique, notamment comprise entre -1 et 40 bars, préférablement comprise entre -1 et 30 bars relativement à la pression atmosphérique.

D'autres caractéristiques et avantages de l'invention ressortiront à la lecture de la description détaillée qui suit, en référence aux figures annexées, qui illustrent :
[Fig. 1] Figure 1 : une vue de face en coupe axiale du dispositif de cuve ;
[Fig. 2] Figure 2 : une vue de dessus du dispositif de cuve;
[Fig. 3] Figure 3 : une vue partielle en coupe axiale de la cuve à l'état fermé ;
[Fig. 4] Figure 4 : une vue partielle en coupe axiale du premier rebord ;
[Fig. 5] Figure 5 : une vue partielle en coupe axiale du deuxième rebord.

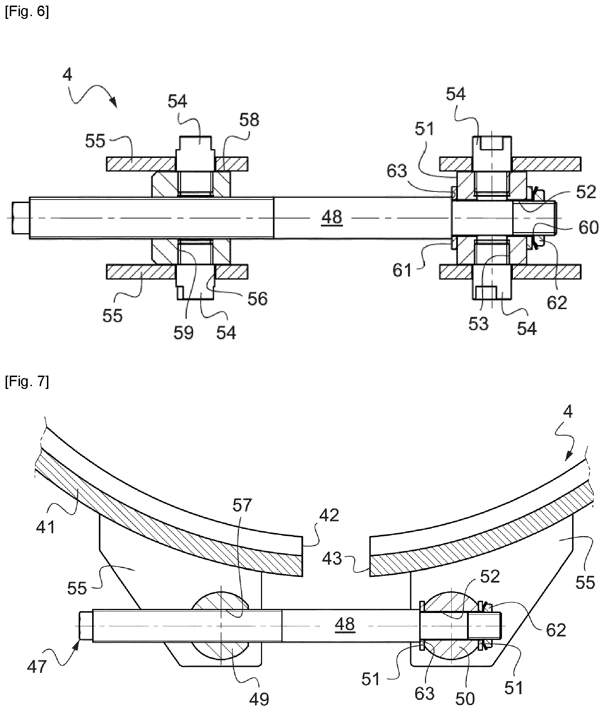

[Fig. 6] Figure 6 : une vue de face en coupe du détail de l'organe de fermeture
[Fig. 7] Figure 7 : une vue de dessus en coupe du détail de l'organe de fermeture ;
[Fig. 8] Figure 8 : une vue de dessus en détail d'un dispositif de fermeture muni d'un carter ;
[Fig. 9] Figure 9 : une vue en coupe axiale du dispositif de fermeture pour trou d'homme de cuve muni d'un carter, le cercle à l'état ouvert ;
[Fig. 10] Figure 10 : une vue de dessus du dispositif de la figure 9 ;
[Fig. 11] Figure 11 : une vue en coupe selon XI-XI du dispositif de la figure 9, le cercle à l'état fermé ;
[Fig. 12] Figure 12 : une vue de dessus du dispositif de fermeture de la figure 11, le vérin étant montré.

Des cuves munies de colliers à secteurs forgés et articulés les uns aux autres sont connues de la Demanderesse. Toutefois, l'action d'ouverture présente un danger pour l'opérateur.

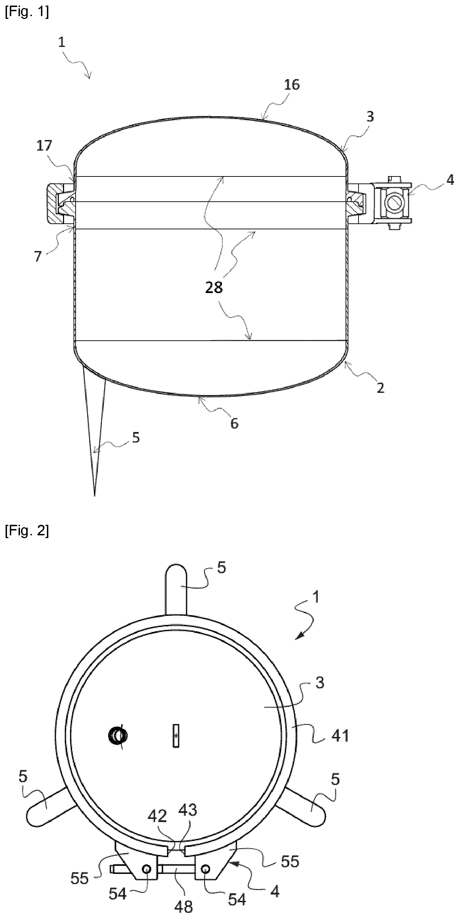

Comme illustré sur les figures 1 et 2, le dispositif de cuve 1 comprend un corps de cuve 2, des pieds 5 supportant le corps de cuve 2, un couvercle de cuve 3 et un organe de fermeture 4. L'organe de fermeture 4 est actif pour fermer le couvercle de cuve 3 sur le corps de cuve 2. Les pieds 5 sont ici au nombre de trois. Les pieds 5 sont divergents vers le bas. Les pieds 5 sont tubulaires. Les pieds 5 sont fixés au corps de cuve 2. Le dispositif de cuve 1 est de forme générale circulaire avec un axe vertical. La cuve peut être munie d'un ou plusieurs agitateurs pour mélanger le fluide contenu dans la cuve. L'agitateur peut comprendre au moins un parmi : pales, ailettes, racleurs, organes briseurs d'agglomérats etc. Selon la viscosité et l'effet recherché, la vitesse de rotation peut être comprise entre quelques tours/minutes et plusieurs milliers de tours/minutes, voire au-delà. La cuve peut être munie d'un réchauffeur et/ou d'un refroidisseur.

Il se produit fréquemment que les parois internes du couvercle de cuve sont recouvertes du fluide. A l'ouverture du couvercle de cuve, le fluide est susceptible de tomber du couvercle de cuve, par exemple sur le rebord du corps de cuve, parfois en quantités importantes si la cuve est grande ou le fluide de consistance pâteuse.

Le corps de cuve 2 comprend une paroi inférieure concave 6 ou fond et une paroi latérale circulaire 7. Le fond de cuve 6 peut être obtenu par emboutissage, repoussage ou hydroformage. Le corps de cuve 2 forme une concavité étanche inférieure. Ledit axe vertical passe par l'extrémité inférieure du corps de cuve 2. Le fond de cuve 6 et la paroi latérale circulaire 7 sont assemblés par soudage. Le cordon de soudure 28 est visible sur la figure 1 et peut, le cas échéant, être meulé et poli.

Le corps de cuve 2 comprend un premier rebord 8 annulaire massif. Le premier rebord 8 est situé en partie supérieure du corps de cuve 2. Le premier rebord 8 présente un alésage 9 commun avec l'alésage de la paroi latérale circulaire 7. Le premier rebord 8 peut être usiné avec enlèvement de matière. Le premier rebord 8 peut être soudé au reste du corps de cuve 2. Le premier rebord 8 présente une surface supérieure 10 s'étendant vers l'extérieur à partir de l'alésage 9, une surface extérieure 11 s'étendant vers le bas à partir de la surface supérieure 10 et une surface inférieure 12 s'étendant vers l'intérieur à partir de la surface extérieure 11 et rejoignant la paroi latérale circulaire 7. La surface supérieure 10 est annulaire. La surface supérieure 10 peut être plane. La surface extérieure 11 est cylindrique de révolution. La surface inférieure 12 est tronconique. Le nettoyage desdites surfaces supérieure 10, extérieure 11 et inférieure 12 est aisé, notamment en l'absence de surface hélicoïdale ou de concavité à petit rayon.

Le corps de cuve 2 est monobloc.

Une rainure 13 annulaire est ménagée à l'intersection de la surface supérieure 10 et de la surface extérieure 11. La rainure 13 présente, en coupe axiale, une portion plane 14 parallèle à la surface supérieure 10 et s'étendant vers l'intérieur à partir de la surface extérieure 11 et une portion tronconique 15 s'étendant entre la portion plane 14 et la surface supérieure 10. L'angle de la portion tronconique 15 par rapport à l'axe du dispositif est compris entre 10 et 40°, notamment entre 15 et 30°. En variante, la rainure est remplacée par un chanfrein d'angle similaire. Le chanfrein consiste en une surface tronconique.

Le couvercle de cuve 3 comprend une paroi supérieure concave 16 et une paroi latérale 17 circulaire munie d'un alésage. Le couvercle de cuve 3 peut être obtenu par emboutissage, hydroformage, repoussage, mécano-soudure ou usinage. Le couvercle de cuve 3 forme une concavité étanche supérieure opposée à la concavité étanche inférieure. Ledit axe vertical passe par le sommet du couvercle de cuve 3. La paroi supérieure concave 16 et la paroi latérale 17 sont assemblées par soudage. Le cordon de soudure 28 est visible sur la figure 1 et peut, le cas échéant, être meulé et poli.

Le couvercle de cuve 3 comprend un deuxième rebord 18 annulaire massif. Le deuxième rebord 18 est situé en partie inférieure du couvercle de cuve 3. Le deuxième rebord 18 est situé au-dessus du premier rebord 8. Le deuxième rebord 18 peut être usiné avec enlèvement de matière. Le deuxième rebord 18 peut être soudé au reste du couvercle de cuve 3.

Le deuxième rebord 18 présente un alésage 19 commun avec l'alésage de la paroi latérale 17. Le deuxième rebord 18 présente une surface inférieure 20 s'étendant vers l'extérieur à partir de l'alésage 19, une surface extérieure 21 s'étendant vers le haut à partir de la surface inférieure 20 et une surface supérieure 22 s'étendant vers l'intérieur à partir de la surface extérieure 21 et rejoignant la paroi latérale 17. La surface inférieure 20 est plane et annulaire. La surface extérieure 21 est cylindrique de révolution. La surface supérieure 22 est tronconique. Le couvercle de cuve 3 est monobloc.

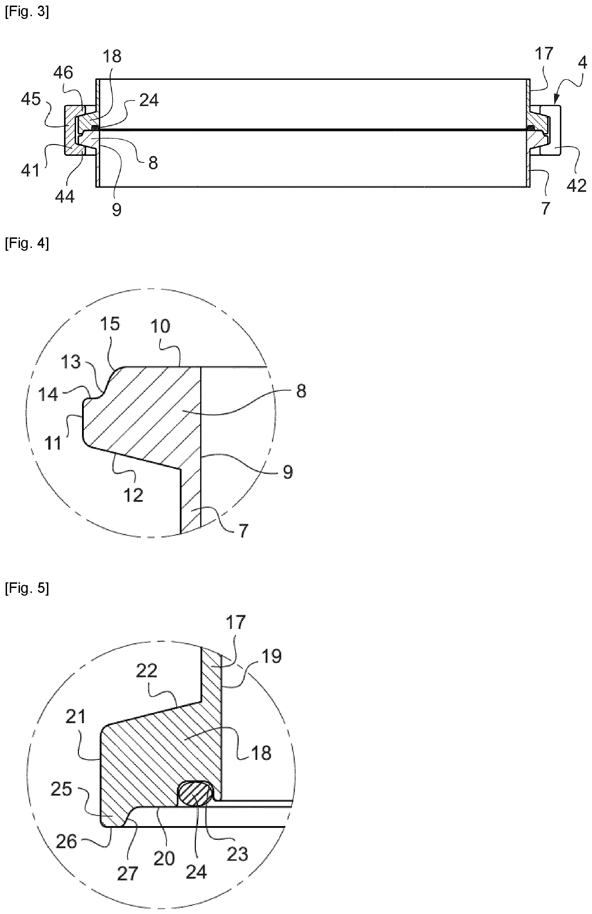

Une gorge annulaire 23 est ménagée dans la surface inférieure 20 plane à distance de l'alésage. La gorge annulaire 23 sépare la surface inférieure 20 plane en deux parties, l'une rejoignant l'alésage, l'autre distante de l'alésage. La gorge annulaire 23 forme un logement pour un joint d'étanchéité 24, par exemple torique. Le joint d'étanchéité 24 peut être monté entre les premier et deuxième rebords 8 et 18, logé dans la gorge annulaire 23. Le joint d'étanchéité 24 est représenté en figure 5 à l'état comprimé correspondant à l'état fermé de la cuve. Le joint d'étanchéité 24 affleure le plan de la surface inférieure 20. Le joint d'étanchéité 24 est en contact élastique avec la surface supérieure 10. A l'état libre non représenté, le joint d'étanchéité 24 est de section circulaire. En alternative, la gorge annulaire 23 est ménagée dans la surface supérieure du premier rebord 8.

Un bourrelet 25 est disposé à l'intersection de la surface inférieure 20 et de la surface extérieure 21. Une forme annulaire de bourrelet est intéressante pour la rigidité et la simplicité de fabrication. Le bourrelet 25 permet de centrer le couvercle de cuve 3 sur le premier rebord 8 du corps de cuve 2. De plus, le bourrelet 25 forme un déviateur de projection de fluide en cas d'ouverture du couvercle de cuve 3 malgré une pression résiduelle dans la cuve supérieure à la pression ambiante. La projection de fluide est déviée vers le bas par rapport au plan radial des surfaces supérieure 10 et inférieure 20. Le bourrelet 25 peut coopérer avec la rainure 13 ou avec le chanfrein.

Le bourrelet 25 présente, en coupe axiale, une portion plane 26 parallèle à la surface inférieure 20 et s'étendant vers l'intérieur à partir de la surface extérieure 21 et une portion tronconique 27 s'étendant entre la portion plane 26 et la surface inférieure 20. L'angle de la portion tronconique 27 par rapport à l'axe du dispositif est compris entre 10 et 40°, notamment entre 15 et 30°. Le bourrelet 25 est en saillie vers le bas par rapport à la surface inférieure 20. Le bourrelet 25 affleure la surface extérieure 21. Dans la variante précitée, le bourrelet 25 peut présenter la portion tronconique 27 se raccordant à la surface extérieure 21.

Le premier rebord 8 coopère à l'état fermé avec le deuxième rebord 18 pour former une jonction étanche. L'étanchéité peut être obtenue par le joint d'étanchéité 24 et/ou par un contact métal/métal continu. A l'état ouvert, le premier rebord 8 est distant du deuxième rebord 18 libérant ainsi un passage permettant d'accéder à l'intérieur de la cuve.

Ainsi, le premier rebord 18 présente le bourrelet 25 annulaire dirigé vers le bas en complémentarité de forme avec la rainure 13 ménagée dans le deuxième rebord 8 entre une surface supérieure 10 et une surface périphérique dudit deuxième rebord 8.

Le couvercle de cuve 3 est fixé de manière amovible au corps de cuve 2 par l'organe de fermeture 4. L'organe de fermeture 4 présente un état verrouillé et un état déverrouillé.

L'organe de fermeture 4 comprend un cercle ouvert 41 métallique, par exemple en acier au carbone, en inox, en alliage de nickel, , par exemple hastelloy^{®} ou en titane. Le cercle ouvert 41 enserre les rebords inférieur 8 et supérieur 18 à l'état fermé. Le cercle ouvert 41 présente une élasticité permettant son installation en franchissant les rebords inférieur 8 et supérieur 18. Le cercle ouvert 41 présente à l'état libre un diamètre sensiblement égal audit diamètre à l'état fermé. Ainsi un effort de serrage exercé sur le cercle ouvert 41 est entièrement dédié à l'effet recherché. En d'autres termes, l'effort pour plaquer le cercle ouvert 41 en contact avec les rebords inférieur 8 et supérieur 18 est nul. L'effort de serrage est plus aisé à estimer pour une pression donnée à l'intérieur de la cuve. La position stable est la position fermée.

Le cercle ouvert 41 est usiné par enlèvement de matière. Les surfaces du cercle ouvert 41 coopérant pour la fermeture de la cuve présentent un état de surface satisfaisant. Le cercle ouvert 41 présente des extrémités 42, 43 se faisant face à faible distance. Les extrémités 42, 43 du cercle ouvert 41 ont des surfaces planes chacune inscrite dans un plan passant par l'axe de la cuve. Ainsi, l'ouverture ou distance entre les extrémités 42, 43 du cercle ouvert 41 à l'état fermé est inférieure à 75 mm, préférablement inférieure à 5 mm. Lors de la mise en pression de la cuve, les concentrations de contraintes sont réduites. Le cas échéant, une surépaisseur de matière au voisinage desdites extrémités 42, 43 peut être prévue pour diminuer une éventuelle déformation du cercle ouvert 41.

Le cercle ouvert 41 est à section en C. Le cercle ouvert 41 comprend une branche inférieure 44, une branche intermédiaire 45 et une branche supérieure 46. La branche inférieure 44 est en appui, à l'état fermé, sur le premier rebord 8. La branche inférieure 44 est en contact avec la surface inférieure 12 du premier rebord 8. La branche supérieure 46 est en appui, à l'état fermé, sur le deuxième rebord 18. La branche supérieure 46 est en contact avec la surface supérieure 22 du deuxième rebord 18. La branche intermédiaire 45 relie les branches inférieure 44 et supérieure 46. La branche intermédiaire 45 entoure les surfaces extérieures 11 et 21 du premier rebord 8 et du deuxième rebord 18. Le cercle ouvert 41 est monobloc.

La branche intermédiaire 45 présente des surfaces intérieure et extérieure cylindriques de révolution.

La branche inférieure 44 présente une dimension radiale supérieure à sa hauteur. La branche inférieure 44 présente une surface d'appui prévue pour coopérer avec le deuxième rebord 18, à l'état fermé. La surface d'appui est tronconique d'angle compris entre 70 et 85° par rapport à l'axe du cône, de préférence compris entre 75 et 80°. A l'opposé de la surface d'appui est prévue une surface annulaire, radiale ou d'angle compris entre l'angle de la surface d'appui et 90° par rapport à l'axe du cône. L'axe du cône et l'axe de la cuve sont confondus.

La branche supérieure 46 présente une dimension radiale supérieure à sa hauteur. La branche supérieure 46 présente une surface d'appui prévue pour coopérer avec le premier rebord 8, à l'état fermé. La surface d'appui est tronconique d'angle compris entre 70 et 85° par rapport à l'axe du cône, de préférence compris entre 75 et 80°. Ledit angle tient compte des propriétés de glissement du matériau du cercle ouvert 41 et du rebord respectif de manière à éviter un grippage. Le cercle ouvert 41 peut être réalisé en acier au carbone, en inox, en alliage de nickel par exemple hastelloy^{®} ou en titane, notamment. Un angle de cône pour l'inox pourra être choisi plus faible que pour l'acier au carbone. La rugosité des surfaces d'appui est préférablement inférieure à un micromètre.

A l'opposé de la surface d'appui est prévue une surface annulaire, radiale ou d'angle compris entre l'angle de la surface d'appui et 90° par rapport à l'axe du cône. L'axe du cône et l'axe de la cuve sont confondus.

Les surfaces d'appui des branches inférieures 44 et supérieure 46 et la surface intérieure de la branche intermédiaire 45 forment un région concave en section axiale. Les surfaces d'appui des branches inférieures 44 et supérieure 46 sont disposées en regard l'une de l'autre.

L'organe de fermeture 4 comprenant en outre un tendeur 47 libérable exerçant, à l'état fermé, une traction tendant à rapprocher les extrémités 42, 43 du cercle ouvert 41 délimitant ladite ouverture. Le cercle ouvert 41 est stable à l'état fermé de la cuve que le tendeur 47 soit tendu ou laissé lâche.

Dans le mode de réalisation représenté, le tendeur 47 libérable comprend une tige 48 filetée en prise avec un écrou 49 solidaire de l'une des extrémités du cercle ouvert 41. La tige 48 est droite. A l'autre extrémité du cercle ouvert 41, la tige 48 est montée à rotation dans une noix 50 de retenue. La noix 50 est solidaire de l'autre extrémité du cercle ouvert 41. La tige 48 et la noix 50 sont solidaires selon l'axe de la tige 48.

La rotation de la tige 48 dans un sens provoque le rapprochement des extrémités, donc le serrage de l'organe de fermeture 4. La rotation de la tige 48 dans l'autre sens provoque l'écartement des extrémités, donc le desserrage de l'organe de fermeture 4. La tige 48 est montée dans le sens circonférentiel de la cuve. La noix 50 présente une forme cylindrique à méplats 51 opposés parallèles dans lesquels une lumière 52 de passage de la tige 48 est ménagée. Les extrémités de la noix 50 sont normales à l'axe du cylindre. Un trou 53 est ménagé dans la noix 50 à partir d'une desdites extrémités traversant jusqu'à l'autre desdites extrémités. Ledit trou est taraudé.

L'écrou 49 est supporté par deux pions 54 portés par deux brides 55 fixées respectivement aux branches inférieure 44 et supérieure 46 du cercle ouvert 41 à l'une des extrémités 42, 43 dudit cercle ouvert 41. Les pions 54 sont coaxiaux d'axe sensiblement parallèle à l'axe de la cuve. Les brides 55 sont d'une pièce avec le cercle ouvert 41. Les pions 54 sont montés dans des trous 56 respectivement ménagés dans les brides. L'écrou 49 présente une forme cylindrique. Une lumière 57 de passage de la tige 48 est ménagée selon un axe perpendiculaire à l'axe du cylindre. Ladite lumière 57 est taraudée. Les extrémités 58 de l'écrou 49 sont normales à l'axe du cylindre. Un trou 59 est ménagé dans l'écrou 49 à partir d'une desdites extrémités traversant jusqu'à l'autre desdites extrémités. Ledit trou 59 est taraudé.

Les pions 54 peuvent être taraudés. Les trous peuvent être taraudés. Ainsi, les pions peuvent être vissés dans les trous pour la fixation desdits pions dans les brides. Les têtes des pions 54 peuvent être munies d'une empreinte d'entraînement.

La noix 50 est supportée par deux pions 54 portés par deux brides 55 fixées respectivement aux branches supérieure et inférieure du cercle ouvert 41 à l'autre des extrémités dudit cercle ouvert 41. Les pions 54 sont coaxiaux d'axe sensiblement parallèle à l'axe de la cuve. Les brides 55 sont d'une pièce avec le cercle ouvert 41. Les pions 54 sont montés dans des trous 56 respectivement ménagés dans les brides 55. Les pions 54 peuvent être filetés. Les trous 56 peuvent être taraudés. Ainsi, les pions 54 peuvent être vissés dans le trou de la noix 50 pour la fixation desdits pions 54 et en saillie au-delà des trous 56 des brides 55. Les têtes des pions 54 peuvent être munies d'une empreinte d'entraînement. La solidarisation axiale de la tige 48 et de la noix 50 est assurée dans un sens par une rondelle 60 et un écrou 62 monté sur la tige 48. Dans l'autre sens, la solidarisation axiale de la tige 48 et de la noix 50 est assurée par une rondelle 61 venant en appui sur un redan 63 ménagé dans la tige 48. Les rondelles 60, 61 du tendeur 47 peuvent être réalisées en bronze. Alternativement, la noix 50 peut être en appui direct sur un redan ménagé dans la tige 48.

Dans d'autres modes de réalisation, le tendeur 47 comprend un vérin électrique à vis ou pneumatique ou hydraulique, un excentrique ou une grenouillère.

Comme illustré, la liaison entre le corps de cuve 2 et le couvercle de cuve 3 est assurée de manière exclusive par l'organe de fermeture 4, à l'état ouvert et à l'état fermé.

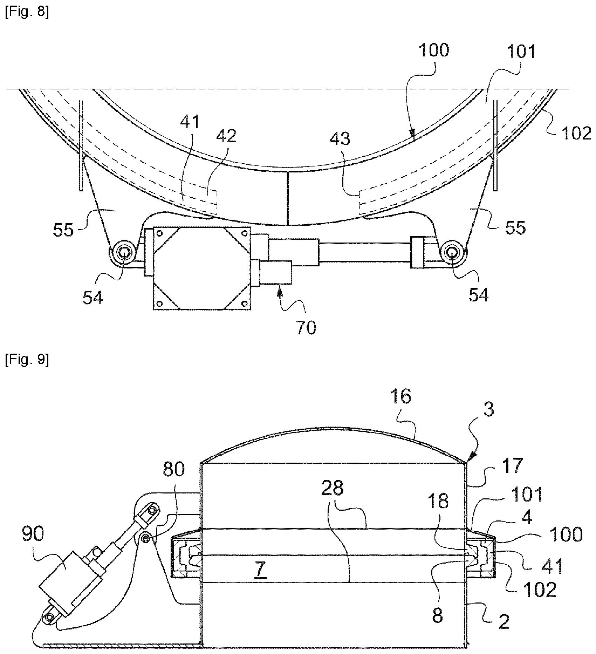

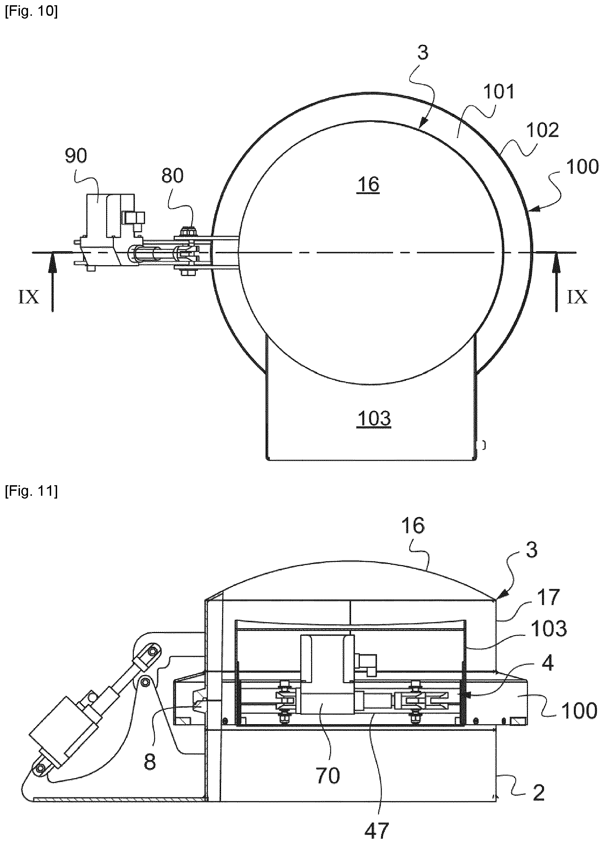

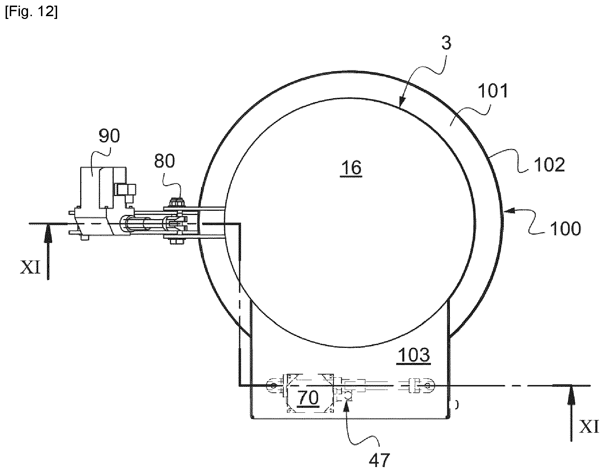

Comme illustré sur les figures 8 à 12, le tendeur 47 peut être un vérin électrique ou pneumatique ou hydraulique 70 commandé à distance ou localement.

En plus de l'organe de fermeture 4, peut être prévue une articulation 80, par exemple une charnière, permettant le pivotement du couvercle de cuve 3 par rapport au corps de cuve 2. L'articulation 80 retient le couvercle de cuve 3 par rapport au corps de cuve 2 à l'état ouvert. L'articulation 80 peut être prévue avec un jeu en position fermée pour laisser l'organe de fermeture 4 opérer par un verrouillage sensiblement annulaire. L'articulation 80 peut être associée à un compensateur passif contre balançant le poids du couvercle de cuve 3 et limitant l'effort à l'ouverture. Le compensateur passif peut être un ressort ou un vérin à gaz. La charnière 80 peut être motorisée par un vérin électrique, pneumatique ou hydraulique 90 associé ou non au compensateur passif précité. L'articulation 80 peut être supportée par le corps de cuve 2 ou un bâti voisin. L'articulation 80 peut être prévue avec une paire de brides supportées par le corps de cuve 2 et une paire de brides supportées par le couvercle de cuve 3.

Un carter 100 est installé autour de l'organe de fermeture 4. Le carter 100 est annulaire à section en L avec une branche supérieure 101 radiale ou tronconique et une branche cylindrique 102 dirigée vers le bas à partir du bord extérieur de la branche supérieure 101 radiale. Le carter 100 forme une jupe prévenant d'éventuelles projections de matière dans une direction radiale. La branche supérieure 101 radiale vient au-dessus du cercle ouvert 4 et des rebords 8 et 18 La branche cylindrique 102 entoure le cercle ouvert 4. Le carter 100 présente une surface intérieure circulaire apte à entrer en contact avec le cercle ouvert 4 lors d'une manoeuvre d'ouverture en cas de désaxement. La surface intérieure est coaxiale à la cuve. Le contact du cercle ouvert 4 sur la surface intérieure maintient le centrage du cercle ouvert 4 par rapport à la cuve. Les risques de décalage radial du cercle ouvert 4 sont réduits.

Le carter 100 peut comprendre un rebord inférieur dirigé radialement vers l'intérieur à partir de la branche cylindrique 102, à l'extrémité de la branche cylindrique 102 opposée à la branche supérieure 101.

Le carter 100 forme un organe de centrage du cercle ouvert 4 lors de l'opération d'extension du diamètre dudit cercle ouvert 4 préalable à l'ouverture de la cuve. Si le cercle ouvert 4 reste en contact avec les rebords 8 et 18 d'un premier côté et s'écarte des rebords 8 et 18 d'un deuxième côté opposé diamétralement au premier côté, alors le cercle ouvert 4 vient buter contre le carter 100 dudit deuxième côté opposé ce qui oblige le cercle ouvert 4 à s'éloigner des rebords 8 et 18 du premier côté. A la place du carter, deux ou plus butées de centrage peuvent être prévues.

Le carter 100 présente une excroissance 103 entourant le vérin électrique 70.

## Revendications

1. Dispositif de fermeture de cuve (1) comprenant un corps de cuve (2), un couvercle de cuve (3) et un organe de fermeture (4), le dispositif comprenant un rebord annulaire solidaire du corps de cuve (2), un rebord annulaire solidaire du couvercle de cuve (3), coopérant à l'état fermé avec le rebord annulaire du corps de cuve (2) pour former une jonction étanche, et l'organe de fermeture (4) comprend un cercle ouvert (41) à section en C comprenant une branche inférieure (44) en appui, à l'état fermé, sur le rebord annulaire du corps de cuve (2) , une branche supérieure (46) en appui, à l'état fermé, sur le rebord annulaire du couvercle de cuve (3), et une branche intermédiaire (45) reliant les branches inférieure et supérieure, le cercle ouvert (41) étant monobloc, le cercle ouvert (41) présentant à l'état libre un diamètre sensiblement égal audit diamètre à l'état fermé, l'organe de fermeture (4) comprenant en outre un tendeur (47) libérable exerçant, à l'état fermé, une traction tendant à rapprocher les extrémités du cercle ouvert (41) délimitant ladite ouverture, et un joint d'étanchéité (24) monté entre les rebords du corps de cuve (2) et du couvercle de cuve (3), **caractérisé en ce que** l'un des rebords (18) présente un bourrelet (25) de centrage dirigé vers le bas en complémentarité de forme avec une rainure annulaire (13) ou un chanfrein annulaire ménagé dans l'autre rebord (8) entre une surface supérieure (10) et une surface périphérique dudit autre rebord (8), le joint d'étanchéité (24) étant logé dans une gorge annulaire (23) de l'un des rebords inférieur et supérieur, la gorge annulaire (23) étant plus large en fond de gorge qu'en ouverture de gorge pour retenir le joint d'étanchéité (24), la rainure (13) ou le chanfrein annulaire étant menagé(e) à l'intersection de la surface supérieure (10) et de la surface extérieure (11), la rainure (13) présentant, en coupe axiale, une portion plane (14) parallèle à la surface supérieure (10) et s'étendant vers l'intérieur à partir de la surface extérieure (11) et une portion tronconique (15) s'étendant entre la portion plane (14) et la surface supérieure (10), l'angle de la portion tronconique (15) par rapport à l'axe du dispositif étant compris entre 10 et 40°, ou le chanfrein ayant une surface tronconique avec un angle par rapport à l'axe du dispositif compris entre 10 et 40°, " et le bourrelet (25) formant un déviateur de projection de fluide en cas d'ouverture du couvercle de cuve (3) malgré une pression résiduelle dans la cuve supérieure à la pression ambiante.

2. Dispositif de fermeture de cuve (1) selon la revendication 1, dans lequel la distance entre les extrémités (42, 43) du cercle ouvert (41) à l'état fermé est inférieure à 75 mm, de préférence inférieure à 5 mm.

3. Dispositif de fermeture de cuve (1) selon la revendication 1 ou 2, dans lequel, lors de l'ouverture de la cuve, l'organe de fermeture (4) reste solidaire du couvercle de cuve (3).

4. Dispositif de fermeture de cuve (1) selon l'une des revendications précédentes, dans lequel le tendeur (47) comprend un ensemble vis-écrou (49) supporté par deux paires de brides (55) solidaires chacune d'une desdites extrémités (42, 43).

5. Dispositif de fermeture de cuve (1) selon l'une des revendications précédentes, dans lequel le tendeur (47) comprend un vérin à vis ou pneumatique ou hydraulique mais préférablement électrique à vis, un excentrique ou une grenouillère.

6. Dispositif de fermeture de cuve (1) selon l'une des revendications précédentes, dans lequel le couvercle de cuve (3) est supporté à l'état ouvert par une articulation (80).

7. Dispositif de fermeture de cuve (1) selon l'une des revendications précédentes, dans lequel le cercle ouvert (41) est usiné par enlèvement de matière.

8. Dispositif de fermeture de cuve (1) selon l'une des revendications précédentes, dans lequel chaque branche, inférieure ou supérieure, présente une surface d'appui prévue pour coopérer avec un rebord respectif inférieur ou supérieur, à l'état fermé, la surface d'appui étant tronconique d'angle compris entre 70 et 85° par rapport à l'axe du cône, de préférence compris entre 75 et 80°.

9. Dispositif de fermeture de cuve (1) selon l'une des revendications précédentes, comprenant un carter (100) autour de l'organe de fermeture (4).

## Patentansprüche

1. Tankverschlussvorrichtung (1), umfassend einen Tankkörper (2), einen Tankdeckel (3) und ein Verschlusselement (4), wobei die Vorrichtung einen ringförmigen Rand, der fest mit dem Tankkörper (2) verbunden ist, einen ringförmigen Rand umfasst, der fest mit dem Tankdeckel (3) verbunden ist und im geschlossenen Zustand mit dem ringförmigen Rand des Tankkörpers (2) zusammenwirkt, um eine dichte Verbindung zu bilden, und das Verschlusselement (4) einen offenen Kranz (41) mit einem C-Querschnitt umfasst, der einen im geschlossenen Zustand an dem ringförmigen Rand des Tankkörpers (2) anliegenden unteren Schenkel (44), einen im geschlossenen Zustand an dem ringförmigen Rand des Tankdeckels (3) anliegenden oberen Schenkel (46), und einen den unteren und den oberen Schenkel verbindenden Zwischenschenkel (45) umfasst, wobei der offene Kranz (41) aus einem Stück besteht, der offene Kranz (41) im freien Zustand einen Durchmesser aufweist, der dem Durchmesser im geschlossenen Zustand im Wesentlichen gleich ist, wobei das Verschlusselement (4) ferner einen lösbaren Spanner (47) umfasst, der im geschlossenen Zustand eine Zugkraft ausübt, die dazu neigt, die Enden des offenen Kranzes (41) einander näherzubringen, die die Öffnung begrenzen, sowie eine Dichtung (24), die zwischen den Rändern des Tankkörpers (2) und des Tankdeckels (3) montiert ist, **dadurch gekennzeichnet, dass** einer der Ränder (18) eine nach unten gerichtete Zentrierwulst (25) aufweist, die formkomplementär mit einer ringförmigen Vertiefung (13) oder einer ringförmigen Abschrägung ist, die in dem anderen Rand (8) zwischen einer oberen Fläche (10) und einer Umfangsfläche des anderen Rands (8) vorgesehen ist, wobei die Dichtung (24) in einer ringförmigen Nut (23) in einem des unteren und des oberen Rands untergebracht ist, wobei die ringförmige Nut (23) am Boden der Nut breiter ist als an der Öffnung der Nut, um die Dichtung (24) zu halten, wobei die Vertiefung (13) oder die ringförmige Abschrägung an dem Übergang der oberen Fläche (10) und der äußeren Fläche (11) vorgesehen ist, wobei die Nut (13) im Axialschnitt einen ebenen Abschnitt (14), der parallel zur oberen Fläche (10) verläuft und sich von der äußeren Fläche (11) nach innen erstreckt, und einen kegelstumpfförmigen Abschnitt (15) aufweist, der sich zwischen dem ebenen Abschnitt (14) und der oberen Fläche (10) erstreckt, wobei der Winkel des kegelstumpfförmigen Abschnitts (15) im Verhältnis zur Achse der Vorrichtung zwischen 10 und 40° beträgt, oder die Abschrägung eine kegelstumpfförmige Oberfläche mit einem Winkel im Verhältnis zur Achse der Vorrichtung, der zwischen 10 und 40° beträgt, aufweist, und die Wulst (25) trotz eines Restdrucks im Tank, der größer als der Umgebungsdruck ist, eine Ablenkeinheit für Flüssigkeitsspritzer beim Öffnen des Tankdeckels (3) bildet.

2. Tankverschlussvorrichtung (1) nach Anspruch 1, wobei der Abstand zwischen den Enden (42, 43) des offenen Kranzes (41) im geschlossenen Zustand weniger als 75 mm, vorzugsweise weniger als 5 mm beträgt.

3. Tankverschlussvorrichtung (1) nach Anspruch 1 oder 2, wobei das Verschlusselement (4) beim Öffnen des Tanks fest verbunden mit dem Tankdeckel (3) bleibt.

4. Tankverschlussvorrichtung (1) nach einem der vorhergehenden Ansprüche, wobei der Spanner (47) eine Schrauben-Mutter-Anordnung (49) umfasst, die von zwei Paaren von Flanschen (55) getragen wird, die jeweils fest mit einem der Enden (42, 43) verbunden sind.

5. Tankverschlussvorrichtung (1) nach einem der vorhergehenden Ansprüche, wobei der Spanner (47) eine Schraubspindel oder eine pneumatische oder hydraulische, vorzugsweise elektrische Schraubspindel, einen Exzenter oder eine Spannbügel umfasst.

6. Tankverschlussvorrichtung (1) nach einem der vorhergehenden Ansprüche, wobei der Tankdeckel (3) im geöffneten Zustand durch ein Scharnier (80) gestützt ist.

7. Tankverschlussvorrichtung (1) nach einem der vorhergehenden Ansprüche, wobei der offene Kranz (41) durch Materialabtrag bearbeitet ist.

8. Tankverschlussvorrichtung (1) nach einem der vorhergehenden Ansprüche, wobei jeder Schenkel, unten oder oben, eine Anlagefläche aufweist, die dazu vorgesehen ist, mit einem jeweiligen unteren oder oberen Rand im geschlossenen Zustand zusammenzuwirken, wobei die Anlagefläche kegelstumpfförmig ist, mit einem Winkel, der zwischen 70 und 85°, vorzugsweise zwischen 75 und 80° beträgt, im Verhältnis zur Kegelachse.

9. Tankverschlussvorrichtung (1) nach einem der vorhergehenden Ansprüche, umfassend ein Gehäuse (100) um das Verschlusselement (4) herum.

## Claims

1. A tank closure device (1) comprising a tank body (2), a tank lid (3) and a closure member (4), the device comprising an annular rim secured to the tank body (2), an annular rim secured to the tank lid (3), cooperating in the closed state with the annular rim of the tank body (2) to form a sealed junction, and the closure member (4) comprises an open circle (41) with a C-like section comprising a lower branch (44) bearing, in the closed state, on the annular rim of the tank body (2), an upper branch (46) bearing, in the closed state, on the annular rim of the tank lid (3), and an intermediate branch (45) linking the lower and upper branches, the open circle (41) being made in one-piece, the open circle (41) having in the free state a diameter substantially equal to said diameter in the closed state, the closure member (4) further comprising a releasable tensioner (47) exerting, in the closed state, a pull tending to bring the ends of the open circle (41) close to each other delimiting said opening, and a sealing gasket (24) mounted between the rims of the tank body (2) and of the tank lid (3), **characterised in that** one of the rims (18) has a centring bead (25) directed downwards in a form-fitting manner with an annular recess (13) or an annular chamfer formed in the other rim (8) between an upper surface (10) and a peripheral surface of said other rim (8), the sealing gasket (24) being accommodated in an annular groove (23) of one of the lower and upper rims, the annular groove (23) being wider at the groove bottom than at the groove opening to hold the sealing gasket (24), the annular recess (13) or chamfer being formed at the intersection of the upper surface (10) and of the external surface (11), the recess (13) having, in axial section, a planar portion (14) parallel to the upper surface (10) and extending inwards from the external surface (11) and a frustoconical portion (15) extending between the planar portion (14) and the upper surface (10), the taper angle of the frustoconical portion (15) with respect to the axis of the device being comprised between 10 and 40°, or the chamfer having a frustoconical surface with a taper angle with respect to the axis of the device comprised between 10 and 40°, and the bead (25) forming a fluid splash deflector in case of opening of the tank lid (3) while there is still a residual pressure in the tank higher than the ambient pressure.

2. The tank closure device (1) according to claim 1, wherein the distance between the ends (42, 43) of the open circle (41) in the closed state is less than 75 mm, preferably less than 5 mm.

3. The tank closure device (1) according to claim 1 or 2, wherein, upon opening the tank, the closure member (4) remains secured to the tank lid (3).

4. The tank closure device (1) according to one of the preceding claims, wherein the tensioner (47) comprises a screw-nut set (49) supported by two pairs of flanges (55) each secured to one of said ends (42, 43).

5. The tank closure device (1) according to one of the preceding claims, wherein the tensioner (47) comprises a screw or pneumatic or hydraulic cylinder but preferably an electric screw cylinder, an eccentric lever or a clamp lock.

6. The tank closure device (1) according to one of the preceding claims, wherein the tank lid (3) is supported in the open state by a hinge (80).

7. The tank closure device (1) according to one of the preceding claims, wherein the open circle (41) is machined by material removal.

8. The tank closure device (1) according to one of the preceding claims, wherein each, lower or upper, branch has a bearing surface intended to cooperate with a respective lower or upper rim, in the closed state, the bearing surface being frustoconical with a taper angle comprised between 70 and 85° with respect to the axis of the cone, preferably comprised between 75 and 80°.

9. The tank closure device (1) according to one of the preceding claims, comprising a casing (100) around the closure member (4).
